# FASCICULE DE BREVET EUROPEEN

(11) **EP 1 047 486 B1**
(45) Date de publication et mention de la délivrance du brevet: **21.02.2007**
(21) Numéro de dépôt: 99954045.3
(22) Date de dépôt: 03.11.1999
(51) Int. Cl.: B01D 45/04, B01D 50/00

(54) **PROCEDE ET DISPOSITIF DE SEPARATION DE PARTICULES SOLIDES PRESENT DANS UN COURANT DE GAZ**
VERFAHREN UND VORRICHTUNG ZUR TRENNUNG VON FESTSTOFFTEILCHEN AUS EINEM GASSTROM
METHOD AND DEVICE FOR SEPARATING SOLID PARTICLES PRESENT IN A GAS STREAM

(30) Priorité: 05.11.1998 FR 9813975
(43) Date de publication de la demande: 02.11.2000
(73) Titulaire: Institut Français du Pétrole, 92852 Rueil-Malmaison Cedex (FR); Dullien, Francis A. L., Drumbo, Ontario N0J 1G0 (CA)
(72) Inventeur: Institut Français du Pétrole, 92852 Rueil-Malmaison Cedex (FR); Dullien, Francis A. L., Drumbo, Ontario N0J 1G0 (CA)
(86) Numéro de dépôt international: PCT/FR1999/002680
(87) Numéro de publication internationale: WO 2000/027501

(56) Documents cités:
- WO-A-97/37746
- GB-A- 2 191 421
- US-A- 4 437 867
- US-A- 5 505 434
- US-A- 5 626 651
- US-A- 5 809 940
- DATABASE WPI Section Ch, Week 9702 Derwent Publications Ltd., London, GB; Class J01, AN 97-019321 XP002108502 & RU 2 057 574 C (SHTEKHMAN B V), 10 avril 1996 (1996-04-10)

## Description

La présente invention concerne à la fois les améliorations apportées aux séparateurs de particules et à la séparation du sable à large distribution granulométrique issu d'un procédé de régénération thermique et présent dans un courant de gaz à haute température.

Le brevet américain n° 5.626.651 ainsi que la demande de brevet international WO97/27928 (cf. également le brevet anglais 2.264.655 publié le 24 mai 1995) décrivent un certain nombre de formes de séparateurs de particules destinés à la séparation de particules entraînées dans un écoulement de gaz turbulent. Ces divulgations sont reprises ici à titre de référence.

Dans la description qui suit, la présente invention sera expliquée dans le cadre de la séparation de particules de sable présentes dans un écoulement de gaz turbulent à haute température et présentant une distribution granulométrique comprise entre environ 1 micron (limite inférieure) et environ 100 microns (limite supérieure). Un tel gaz chargé de particules est un sous-produit obtenu dans le cadre de procédés de régénération de sable de fonderie.

Il est clair cependant que cette illustration de la présente invention relative à la séparation de particules solides contenues dans un écoulement de gaz turbulent n'est pas destinée à limiter le cadre plus vaste de la présente invention, l'invention étant également applicable à la séparation d'autres particules solides en suspension dans un écoulement de gaz turbulent.

On a découvert que les grains de sable d'une taille supérieure à environ 30 microns ont tendance à rebondir sur les plaques collectrices d'un dispositif de précipitation tel que décrit dans le brevet américain n° 5.626.651 ou dans le brevet européen correspondant EP-B1-626 880 ; ceci réduit l'efficacité de leur élimination hors des courants de gaz. On a observé aussi que l'intensité du rebond des grains de sable sur les plaques collectrices et la perte d'efficacité qui en résulte augmentent avec la taille des grains. C'est pourquoi l'élimination de la fraction de sable constituée de grains de sable d'une taille supérieure à environ 30 microns nécessiterait la construction de dispositifs de précipitation ayant des plaques de très grande longueur dont le coût serait prohibitif en raison du très grand nombre de plaques collectrices requises.

L'autre problème lié à la séparation de grains de sable de grande taille au moyen de dispositifs de précipitation à plaques réside dans la tendance de ces grains de sable à éroder les plaques collectrices, ce qui entraîne des dépenses injustifiées en vue du remplacement des plaques et l'interruption concomitante du processus d'élimination de la charge de sable présente dans le courant de gaz.

L'objet de la présente invention est notamment de pallier les inconvénients précités en proposant un procédé et un ensemble de séparateurs de particules permettant d'éliminer les grains de sable d'une taille supérieure à environ 30 microns présents dans un courant de gaz avant leur entrée dans un autre dispositif, par exemple à précipitation. Cet objectif est atteint en utilisant un moyen spécialement conçu pour la séparation efficace de particules telles que des grains de sable d'une taille supérieure à environ 30 microns présents dans un courant de gaz.

L'objet de la présente invention est un procédé de séparation de particules solides à large distribution granulométrique présentes dans un courant de gaz turbulent, caractérisé en ce qu'il consiste:
- en premier lieu, à éliminer les plus grosses particules dans une chambre de séparation avec une efficacité élevée en faisant passer ledit courant dans ladite chambre de dimension déterminée pour réduire la vitesse d'écoulement dudit courant de gaz et d'amener lesdites particules à se déposer sous l'effet de la gravité sur une faible hauteur, puis à heurter une paroi arrière de ladite chambre et à tomber le long de la paroi dans la partie inférieure de ladite chambre,
- à éliminer, avec une efficacité élevée, les particules plus fines restantes dans un dispositif de précipitation à plaques ou à structure poreuse à canaux.

La présente invention peut ainsi, d'une part, être définie comme un procédé de séparation de grains de sable à distribution granulométrique étendue, présents dans un courant de gaz turbulent, comportant en premier lieu l'élimination de la fraction de sable constituée de grains de sable de grande taille dans une chambre de séparation prévue à cet effet, puis l'élimination des grains de sable fins restants dans un dispositif de précipitation à plaques ou à structure poreuse à canaux, d'une longueur très inférieure à celle qui aurait été nécessaire pour une élimination efficace du sable de large granulométrie, si le courant de gaz avait été directement introduit dans un dispositif de séparation, tel de précipitation à plaques.

L'invention vise en outre l'utilisation d'un tel procédé pour la séparation de grains de sable entraînés par un courant de gaz à haute température, ledit courant étant issu d'un procédé de régénération thermique de sable.

L'invention vise encore un ensemble de séparation de particules solides à large distribution granulométrique présentes dans un courant de gaz turbulent, caractérisé en ce qu'il comprend :
- une chambre de séparation destinée à recevoir ledit courant de gaz turbulent à haute température contenant lesdites particules solides en suspension et à éliminer dudit courant la majorité des particules de plus grande taille par effet de la gravité et par heurts contre une paroi arrière de ladite chambre , et
- un dispositif de précipitation à plaques ou à structure poreuse à canaux qui reçoit ledit courant issu de ladite chambre de séparation pour éliminer les plus fines particules dudit courant.

La chambre de séparation peut comporter un conduit horizontal muni d'un orifice d'admission destiné à recevoir le courant et un autre conduit destiné à l'évacuation dudit courant, relié à une fente horizontale dans la paroi arrière de la chambre qui s'étend sur toute la largeur de la chambre et qui est située à l'extrémité supérieure de ladite chambre. La chambre de séparation comporte également des parties inférieures présentant un effilement progressif vers le bas, dans lesquelles les plus grandes particules sont recueillis après avoir été éliminées du courant de gaz.

A partir de ladite chambre, le sable (les grains de plus grande taille) peut être évacué dans des conteneurs.

De façon plus précise, le dispositif de précipitation à plaques comprend :
- une entrée pour le courant de gaz chargé et frontalement une sortie pour le courant gazeux dont les particules sont éliminées,
- un logement muni d'une partie supérieure horizontale et d'un premier fond en forme d'auge présentant une pente ascendante relativement au sens de l'écoulement du courant de gaz,
- une pluralité de plaques collectrices équidistantes, sensiblement de même hauteur, coopérant avec ledit fond 7 en forme d'auge,
- un passage d'écoulement des gaz délimité par les bords supérieurs des plaques, la partie supérieure du logement et les parois latérales du logement,
- des moyens disposés au point le plus bas dudit fond en forme d'auge, à mi-chemin entre deux plaques collectrices adjacentes, à travers lesquels les fines particules capturées par les plaques sont évacuées,
- un second fond sensiblement parallèle audit fond en forme d'auge, sur lequel les fines particules évacuées par lesdits moyens tombent et glissent vers le bas,
- au moins un orifice d'évacuation de poussières à l'extrémité inférieure dudit second fond, associé à un conduit relié audit orifice d'évacuation de poussières,
- un canal d'évacuation de poussières entre les deux fonds du logement,
- une cloison séparant le passage d'écoulement de gaz et le canal d'évacuation de poussières.

Dans l'autre variante, le dispositif de précipitation à structure poreuse à canaux comprend au moins une structure poreuse, par exemple de la mousse réticulée, percée de canaux à travers lesquels circule de façon turbulente le gaz chargé des particules restantes.

L'ensemble de séparation selon l'invention peut par ailleurs comprendre un moyen d'aspiration du courant gazeux.

Le dispositif de précipitation à plaques qui fait partie de la combinaison indiquée ci-avant peut avoir la forme de n'importe quel dispositif décrit dans les brevets cités ci-dessus et comporte, selon une forme préférée, des plaques de même hauteur montées, avec une pente ascendante dans le sens de l'écoulement du courant de gaz, sur le fond d'un logement présentant une extrémité supérieure horizontale, ce qui donne une hauteur de passage décroissante pour le courant de gaz. Le fond présente la forme d'une auge et comporte en son point le plus bas des trous de faible diamètre à travers lesquels le sable fin est évacué vers un second fond sur lequel il glisse avant d'être évacué à travers un orifice dans un conduit relié à un conteneur. L'activation périodique d'un vibrateur fixé à la surface extérieure du second fond participe à l'évacuation des fines poussières.

Le dispositif de précipitation à structure poreuse percée de canaux peut être semblable à ceux décrits dans les demandes de brevets FR-2777801 et FR-2769517, citées ici en référence.

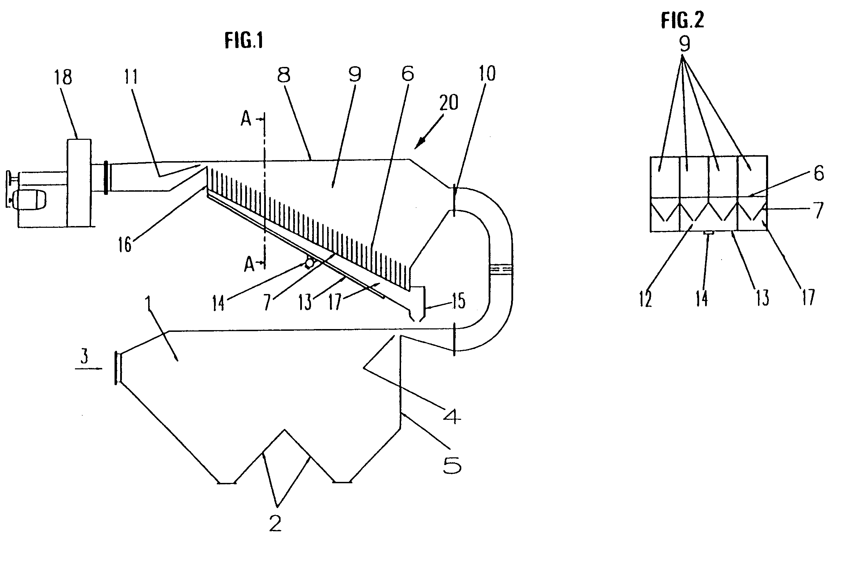

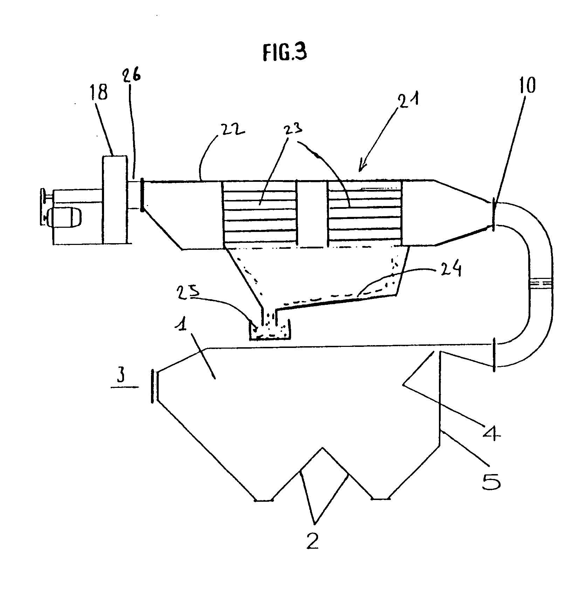

La figure 1 représente la disposition globale d'un ensemble comprenant une chambre de séparation et un dispositif de précipitation à plaques selon un mode de réalisation préféré de la présente invention. La figure 2 est une vue en coupe du dispositif de précipitation à plaques selon la coupe AA de la figure 1. La figure 3 représente une autre variante dans laquelle le dispositif de séparation est suivi d'un dispositif de séparation à précipitation dans une structure poreuse percée de canaux.

Un dispositif de séparation est représenté dans la partie inférieure de la figure 1 et est constitué d'une chambre 1 munie de parties inférieures 2 présentant un effilement vers le bas, d'un conduit circulaire axial d'entrée du gaz 3 et d'une sortie 4 en forme de fente qui s'étend sur toute la largeur de la chambre 1 et qui est située à l'extrémité supérieure d'une paroi arrière 5 de la chambre 1.

Selon ce mode de réalisation de l'invention, la position en hauteur de la sortie 4 en forme de fente par rapport au fond de la chambre, est au moins égale à la distance sur laquelle les grains de sable d'une taille d'environ 30 microns se déposent durant le temps de séjour du gaz dans la chambre 1. Les particules de taille supérieure se déposent sur une plus grande hauteur et un grand nombre d'entre elles tombe dans les trémies 2 avant d'atteindre la paroi arrière 5. Cependant, la plupart des grains de sable d'une taille égale ou supérieure à 30 microns viennent heurter la paroi arrière 5 de la chambre.

La valeur de 30 microns n'est donnée ici qu'à titre indicatif.

On a découvert de manière expérimentale qu'avec une faible vitesse d'écoulement du gaz, de l'ordre de 1 m/s, mise en oeuvre dans la chambre 1, les grains de sable ne rebondissent pas sur la paroi 5 après l'avoir heurtée, mais tombent le long de la paroi dans la trémie la plus proche de la sortie. L'expérience montre aussi que le sable qui tombe le long de la paroi 5 n'est pas repris et ré-entraîné par le gaz. La raison physique en est que, sur la paroi 5, le gaz présente seulement un écoulement visqueux (non turbulent) dont la vitesse est très inférieure à la vitesse de dépôt des grains de sable. Le sable évacué dans les trémies 2 n'est lui non plus ni repris ni ré-entraîné car la vitesse de collecte des grains de sable est largement supérieure à 1 m/s. Le volume de la chambre 1 est dimensionnée pour que la vitesse du gaz chargé soit suffisamment faible pour que le principe de dépôt des particules les plus lourdes, ainsi décrit, ait lieu.

Un dispositif de séparation 20 est représenté dans la partie supérieure de la figure 1. Le dispositif 20 a été perfectionné par rapport aux dispositifs de précipitation décrits dans l'art antérieur et en particulier dans les brevets cités en tête de la description.

Il comprend essentiellement un logement muni d'une extrémité supérieure horizontale 8 et de fonds 7 et 13 en pente. Des plaques collectrices verticales 6 présentant sensiblement la même hauteur sont montées sur le fond en pente 7. L'entrée du gaz dans le dispositif de séparation 20 s'effectue par un orifice circulaire 10. La hauteur du passage 9 d'écoulement du gaz dans le dispositif de séparation diminue de l'entrée 10 vers la sortie 11. Les grains de sable fins en suspension dans le gaz qui entre dans le dispositif de précipitation 20 par l'entrée 10 sont entraînés par les fluctuations de la vitesse d'écoulement turbulent dans des espaces compris entre les plaques, où ils viennent heurter et se déposer sur les plaques 6. Ce phénomène a déjà été explicité dans l'art antérieur cité en tête de la description.

Il a été découvert de manière expérimentale que l'efficacité d'élimination augmente lorsque la hauteur du passage d'écoulement 9 est décroissante relativement au sens de propagation du courant gazeux turbulent. Il a été observé que les particules les plus fines se déposaient sur les plaques à proximité de la sortie du dispositif de précipitation. En outre après la formation d'une couche de fines poussières sur les plaques 6, on a observé que le dépôt se détachait de lui-même sous l'action de la gravité. Les poussières tombent alors des plaques 6 sur le fond 7 en forme d'auge du dispositif de précipitation.

La figure 2 montre un passage 9 divisé en quatre compartiments identiques. Ceci n'a rien d'obligatoire. La figure 2 montre que la forme des plaques 6 est adaptée à la forme en auge du fond 7. Par ailleurs le fond 7, deux plaques 6 et deux cloisons forment une cellule qui comporte, en son point central inférieur, un trou circulaire 12 de faible diamètre à travers lequel les poussières sont évacuées dans un compartiment 17 muni d'un fond 13. Lesdites poussières glissent le long du fond 13, aidées en cela par l'activation intermittente d'un vibrateur 14 fixé sur ledit fond 13. Les poussières pénètrent ensuite dans un conduit général d'évacuation de poussières 15 disposé au bas de la pente formée par les 2 fonds. Le compartiment d'évacuation de poussières 17 est séparé du passage d'écoulement de gaz 9 par la cloison 16. Les poussières peuvent enfin être évacuées dans un conteneur (non représenté) relié au conduit d'évacuation 15.

Conformément à l'invention, le gaz passe successivement à travers la combinaison constituée de la chambre de séparation 1 et du dispositif 20 de précipitation à plaques grâce à un moyen d'aspiration 18 disposé en aval de la sortie 11. L'évacuation et l'élimination du sable ou des poussières présents dans cette combinaison s'effectue en continu, sans interruption de l'écoulement gazeux et séparation de solides du gaz.

A titre d'exemple de réalisation de cette invention, l'ensemble suivant peut être cité : une chambre de séparation 1 et un dispositif de précipitation à plaques destinée au traitement d'un débit de gaz d'environ 11000 Am³/h à une température comprise entre 500 et 700°C, dans lequel est entraîné du sable de fonderie, présente les dimensions suivantes : longueur de la chambre de séparation 1 : 4,5 m, hauteur (le fond effilé vers le bas exclu) : 1,6 m, largeur : 1,8 m. La fente 4 de sortie du gaz présente une hauteur de 15 cm. 90 % en poids du sable ont été éliminés dans la chambre (1). La longueur du passage d'écoulement de gaz 9 du dispositif de précipitation à plaques est de 3,2 m, sa largeur de 1,8 m et sa hauteur est décroissante, de 1,5 m à l'entrée jusqu'à 7,6 cm à la sortie 11. La hauteur des plaques collectrices 6 est de 32 cm et les plaques sont espacées de 7,6 cm. Les trous 12 d'évacuation des poussières présentent un diamètre de 13 mm. L'efficacité d'élimination du sable thermique par la combinaison constituée de la chambre de séparation et du dispositif de précipitation à plaques était de l'ordre de 99,5 %. Le dispositif de précipitation à plaques seul peut éliminer seulement environ 70 % en poids du sable thermique, d'où la synergie entre une chambre de séparation de type 1 et le dispositif de précipitation à plaques. La raison physique de cette synergie est que les grains de sable de grande taille sont éliminés de manière plus efficace dans la chambre de séparation 1 dont le principe de séparation peut être dit « gravitaire », alors que les particules plus fines sont éliminées plus efficacement dans le dispositif de précipitation à plaques 20.

Les performances de la chambre de séparation peuvent être comparées à celles d'un séparateur horizontal à gravité conventionnel. Pour atteindre une efficacité d'élimination de 100 % des grains de sable d'un diamètre de 30 microns, un séparateur horizontal à gravité conventionnel de même hauteur et de même largeur que la chambre de séparation décrite dans l'exemple ci-dessus de la présente invention doit avoir une longueur d'environ 48 m, ce qui est 11 fois plus grand que la longueur de 4,5 m de la chambre de séparation de la présente invention. Si l'on décidait que la hauteur, la largeur et la longueur d'un séparateur horizontal à gravité conventionnel devaient avoir la même valeur, on a calculé que ces trois dimensions s'élèveraient alors à 9,4 m.

Les performances de la chambre de séparation peuvent également être comparées à celles de séparateurs à inertie de conception complexe qui peuvent atteindre une efficacité d'élimination de 90 % des grains de sable de 30 microns, mais au prix d'une perte de charge très supérieure aux 180 Pa mesurés dans la chambre de séparation.

Les collecteurs cyclones à haute performance peuvent presque atteindre 100 % d'efficacité d'élimination de grains de sable de 30 microns, mais également au prix d'une perte de charge largement supérieure à 180 Pa.

L'efficacité totale d'élimination de sable thermique par la combinaison selon l'invention, de l'ordre de 99,5 %, n'est égalée par aucun autre séparateur mécanique connu.

Dans la variante illustrée par la figure 3, le dispositif 21 de séparation des particules plus fine comprend une conduite tubulaire 22 raccordée à l'entrée 10 du flux de gaz sortant de la chambre 1 et à la sortie 26 sur laquelle peut être monté un système d'aspiration du gaz. La référence 23 désigne plusieurs massifs de matériau poreux percé de canaux selon l'axe principal de la conduite 22. Le dispositif de séparation peut correspondre à celui décrit dans la publication WO 99/19044 correspondante à la demande FR 2769517. La porosité de la mousse est supérieure à 90%, la taille des cellules est comprise entre 0,5 et 5 mm. Il est clair qu'il s'agit d'une mousse à cellules ouvertes, c'est à dire que les pores communiquent. Ces massifs sont percés de canaux, par exemple de diamètre compris entre 3 et 100 mm. Le fonctionnement est le suivant : le courant turbulent du gaz chargé de particules circule dans les canaux parallèles entre eux, sans perte de charge notable, et les particules pénètrent dans la paroi des canaux. Un système à vibration peut expulser les particules du matériau poreux et les faire se déplacer vers un réceptacle 24 qui collecte les particules dans un bac 25.

En fonction du débit de gaz, la conduite 21 peut être plus ou moins longue et équipée d'un ou de plusieurs massifs poreux 23 disposés en série.

## Revendications

1. Procédé de séparation de particules solides à large distribution granulométrique présentes dans un courant de gaz turbulent, **caractérisé en ce qu'**il consiste:
- en premier lieu, à éliminer les plus grosses particules dans une chambre de séparation (1) avec une efficacité élevée en faisant passer ledit courant dans ladite chambre de dimension déterminée pour réduire la vitesse d'écoulement dudit courant de gaz et d'amener lesdites particules à se déposer sous l'effet de la gravité sur une faible hauteur, puis à heurter une paroi arrière (5) de ladite chambre (1) et à tomber le long de la paroi dans la partie inférieure (2) de ladite chambre (1),
- à éliminer, avec une efficacité élevée, les particules plus fines restantes dans un dispositif de précipitation (20 ; 21) à plaques ou à structure poreuse à canaux.

2. Procédé selon la revendication 1, dans lequel les particules solides sont entraînées par un courant de gaz à haute température, ledit courant étant issu d'un procédé de régénération thermique de sable.

3. Procédé selon l'une des revendications précédentes dans lequel la distribution granulométrique des particules est comprise entre 1 µm et environ 100 µm.

4. Ensemble de séparation de particules solides à large distribution granulométrique et présentes dans un courant de gaz turbulent, **caractérisé en ce qu'**il comprend :
- une chambre de séparation (1) destinée à recevoir ledit courant de gaz turbulent à haute température contenant lesdites particules solides en suspension et à éliminer dudit courant la majorité des particules de plus grande taille par effet de la gravité et par heurts contre une paroi arrière (5) de ladite chambre (1), et
- un dispositif de précipitation (20 ; 21) à plaques ou à structure poreuse à canaux qui reçoit ledit courant issu de ladite chambre de séparation (1) pour éliminer les plus fines particules dudit courant.

5. Ensemble selon la revendication 4, dans lequel ladite chambre (1) comprend :
- un orifice d'entrée (3) du courant et un orifice d'évacuation dudit courant en forme de fente horizontale (4) aménagée dans une paroi arrière (5) de la chambre (1), qui s'étend sur toute la largeur de la chambre (1) et qui est située dans la partie supérieure de ladite paroi, et
- des parties inférieures (2) effilées vers le bas dans lesquelles les plus grandes particules sont recueillies après avoir été éliminées dudit courant de gaz.

6. Ensemble selon l'une quelconque des revendications 4 à 5 dans lequel ledit dispositif de précipitation (20) à plaques comprend :
- une entrée (10) pour le courant de gaz reliée à la sortie (4) de la chambre de séparation (1) et une sortie (11) pour le courant gazeux,
- un logement muni d'une partie supérieure horizontale (8) et d'un premier fond en forme d'auge (7) présentant une pente ascendante relativement au sens de l'écoulement du courant de gaz,
- une pluralité de plaques collectrices (6) équidistantes, sensiblement de même hauteur, coopérant avec ledit fond (7) en forme d'auge,
- un passage (9) d'écoulement des gaz délimité par les bords supérieurs des plaques (6), la partie supérieure (8) du logement et les parois latérales du logement,
- des moyens (12) disposés au point le plus bas dudit fond (7) en forme d'auge, à mi-chemin entre deux plaques collectrices adjacentes, à travers lesquels les fines particules capturées par les plaques (6) sont évacuées,
- un second fond (13) sensiblement parallèle audit fond (7) en forme d'auge, sur lequel les fines particules évacuées par lesdits moyens (12) tombent et glissent vers le bas,
- au moins un orifice d'évacuation de poussières à l'extrémité inférieure dudit second fond (13), associé à un conduit (15) relié audit orifice d'évacuation de poussières,
- un canal d'évacuation (17) de poussières entre les deux fonds (7, 13) du logement,
- une cloison (16) séparant le passage (9) d'écoulement de gaz et le canal d'évacuation de poussières.

7. Ensemble selon l'une des revendication 4 à 5, dans lequel le dispositif de précipitation à structure poreuse à canaux comprend au moins un massif de matériau poreux (23) disposé dans un conduit (22) qui communique avec la sortie 4 de ladite chambre (1), ledit massif est percé de canaux selon la direction de l'axe principal dudit conduit de façon que le courant de gaz circule à travers lesdits canaux.

8. Ensemble selon la revendication 7, dans lequel le dispositif de précipitation comprend plusieurs massifs de matériau poreux, disposés en série et espacés le long dudit conduit.

9. Ensemble selon l'une des revendications 4 à 8, dans lequel le dispositif (20) comprend en outre un moyen (18) d'aspiration du courant gazeux.

## Claims

1. A method for separating solid particles with a large particle size distribution present in a turbulent gas stream, **characterised in that** it consists in:
- firstly, eliminating the largest particles in a separation chamber (1) with high efficiency by passing said stream into said chamber having a determined size so as to reduce the flow velocity of said gas stream and cause said particles to be deposited under the effect of gravity at a low height, then to impact against a rear wall (5) of said chamber (1) and fall along the wall into the lower part (2) of said chamber (1),
- eliminating, with high efficiency, the remaining finer particles in a precipitation device (20; 21) with plates or having a porous structure with channels.

2. The method according to Claim 1, wherein the solid particles are driven by a high-temperature gas stream, said stream being the result of a process of thermal regeneration of sand.

3. The method according to one of the preceding claims wherein the particle size distribution of the particles is between 1µm and about 100µm.

4. An assembly for separating solid particles with a large particle size distribution present in a turbulent gas stream, **characterised in that** it includes:
- a separation chamber (1) for receiving said turbulent gas stream at high temperature containing said solid particles in suspension and for eliminating from said stream the majority of the greater-sized particles under the effect of gravity and by means of impacts against a rear wall (5) of said chamber (1), and
- a precipitation device (20; 21) with plates or having a porous structure with channels, which receives said stream which results from said separation chamber (1) to eliminate the finest particles from said stream.

5. The assembly according to Claim 4, wherein said chamber (1) includes:
- an inlet port (3) for the stream and an evacuation port in the shape of a horizontal slot (4) for said stream arranged in a rear wall (5) of the chamber (1), which extends along the whole width of the chamber (1) and which is located in the upper part of said wall, and
- downwardly tapered lower parts (2) wherein the largest particles are collected after having been eliminated from said gas stream.

6. The assembly according to any one of Claims 4 to 5 wherein said precipitation device (20) with plates includes:
- an inlet (10) for the gas stream connected to the outlet (4) of the separation chamber (1) and an outlet (11) for the gas stream,
- a housing provided with a horizontal upper part (8) and a first trough-shaped base (7) having an upward incline relative to the direction of flow of the gas stream,
- a plurality of equidistant collection plates (6) of substantially the same height, cooperating with said trough-shaped base (7),
- a gas flow passage (9) defined by the upper edges of the plates (6), the upper part (8) of the housing and the side walls of the housing,
- means (12) positioned at the lowest point of said trough-shaped base (7), half-way between two adjacent collection plates, through which the fine particles trapped by the plates (6) are evacuated,
- a second base (13) substantially parallel to said trough-shaped base (7), onto which the fine particles evacuated by said means (12) fall and slide downwards,
- at least one dust evacuation port at the lower end of said second base (13), associated with a conduit (15) connected to said dust evacuation port,
- a dust evacuation channel (17) between both bases (7, 13) of the housing,
- a partition (16) separating the gas flow passage (9) and the dust evacuation channel.

7. The assembly according to one of Claims 4 to 5, wherein the precipitation device having a porous structure with channels includes at least one mass of porous material (23) positioned in a conduit (22) which communicates with the outlet 4 of said chamber (1), said mass having channels bored therethrough along the direction of the main axis of said conduit such that the gas stream travels through said channels.

8. The assembly according to Claim 7, wherein the precipitation device includes several masses of porous material, positioned in series and spaced apart along said conduit.

9. The assembly according to one of Claims 4 to 8, wherein the device (20) further includes means (18) for drawing-in the gas stream.

## Patentansprüche

1. Verfahren zur Trennung von festen Partikeln mit einer breiten granulometrischen Verteilung, die in einem turbulenten Gasstrom vorhanden sind, **gekennzeichnet dadurch, dass** das Verfahren umfasst:
- an erster Stelle die Eliminierung der größten Partikel in einer Kammer zur Trennung (1) mit einem erhöhten Wirkungsgrad, wobei besagter Strom besagte Kammer passiert, wobei diese eine bestimmte Größenordnung aufweist, die die Durchströmungsgeschwindigkeit des besagten Stromes reduziert und besagte Partikel dazu bringt, sich unter der Einwirkung der Schwerkraft auf einer geringen Höhe abzulegen und dann gegen eine Rückwand (5) der besagten Kammer (1) zu prallen und entlang der Wand in den tieferen Teil (2) der besagten Kammer (1) zu fallen,
- die Eliminierung der feineren Partikel mit einem erhöhten Wirkungsgrad, wobei diese in einer Vorrichtung zur Präzipitation (20; 21) aus Platten oder aus einer porösen Struktur mit Kanälen verbleiben.

2. Verfahren nach Anspruch 1, wobei die festen Partikel durch einen Gasstrom mit hoher Temperatur bewegt werden, wobei besagter Strom einem Verfahren zur thermischen Regeneration von Sand entstammt.

3. Verfahren nach den vorangegangenen Ansprüchen, wobei die granulometrische Verteilung der Partikel zwischen 1 µm und etwa 100 µm liegt.

4. Vorrichtung zur Trennung von festen Partikel mit einer breiten granulometrischen Verteilung, die sich in einem turbulenten Gasstrom befinden, **gekennzeichnet dadurch, dass** diese umfasst:
- Kammer zur Trennung (1), die dazu dient, besagten turbulenten Gasstrom bei einer hohen Temperatur aufzufangen, wobei diese die besagten festen Partikel auffängt und die Eliminierung der meisten Partikel größerer Größe des besagten Stromes durch die Wirkung der Schwerkraft und durch Aufschlagen gegen eine Rückwand (5) der besagten Kammer (1) eliminiert, und
- Vorrichtung zur Präzipitation (20; 21) aus Platten oder aus einer porösen Struktur mit Kanälen, die besagten Strom, der aus besagter Kammer zur Trennung (1) kommt, abfängt, um die feineren Partikel des besagten Stromes zu eliminieren.

5. Vorrichtung nach Anspruch 4, wobei besagte Kammer (1) umfasst:
- Eingangsöffnung (3) für den Strom und Evakuierungsöffnung für den besagten Strom in Form eines horizontalen Schlitzes (4), der sich in der Rückwand (5) der Kammer (1) befindet, wobei sich dieser entlang der gesamten Länge der Kammer (1) erstreckt und sich im oberen Bereich der besagten Wand befindet, und
- untere Bereiche (2), die sich zum Boden hin verjüngen, wobei die größeren Partikel aufgefangen werden, nachdem sie durch den besagten Gasstrom eliminiert wurden.

6. Vorrichtung nach einem der Ansprüche 4 bis 5, wobei besagte Vorrichtung zur Präzipitation (20) mit Platten umfasst:
- Eingang (10) für den Gasstrom, der mit dem Ausgang (4) der Kammer zur Trennung (1) verbunden ist und Ausgang (11) für den Gasstrom,
- Gehäuse, versehen mit einem oberen horizontalen Bereich (8) und einem ersten Boden in Form einer Mulde (7), die eine aufsteigende Neigung aufweist, die der Durchströmungsrichtung des Gasstromes entspricht,
- mehrere abstandsgleiche Auffangplatten (6), die in etwa dieselbe Höhe aufweisen, wobei diese mit dem besagten Boden (7) in Form einer Mulde zusammenwirken,
- Durchlass (9) für die Durchströmung des Gases, welcher durch die oberen Ränder der Platten (6), den oberen Bereich (8) des Gehäuses und die Seitenwände des Gehäuses begrenzt ist,
- Mittel (12), die am tiefsten Punkt des besagten Bodens (7) in Form einer Mulde auf halbem Wege zwischen den angrenzenden Aufnahmeplatten angeordnet sind, durch die die feinen aufgefangenen Partikel mit Hilfe der Platten (6) eliminiert werden,
- zweiter Boden (13), der sich in etwa parallel zum besagten Boden (7) befindet, wobei dieser auch in Form einer Mulde ist, auf den die feinen Partikel, die durch besagte Mittel (12) beseitigt wurden, herabfallen und nach unten rutschen,
- mindestens eine Öffnung zur Entsorgung des Staubs am unteren Ende des besagten zweiten Bodens (13), wobei diese mit einer Zuleitung (15) verbunden ist, die an besagte Öffnung für die Entsorgung des Staubs gekoppelt ist,
- Entsorgungskanal (17) für den Staub zwischen den beiden Böden (7, 13) des Gehäuses,
- Scheidewand (16), die den Durchlass (9) für den Gasstrom und den Entsorgungskanal für den Staub trennt.

7. Vorrichtung nach einem der Ansprüche 4 bis 5, wobei die Vorrichtung zur Präzipitation mit einer porösen Struktur mit Kanälen mindestens ein Material aus porösen Bestandteilen (23) umfasst, welches in der Zuleitung (22), die mit dem Ausgang (4) der besagten Kammer (1) verbunden ist, angeordnet ist, wobei besagtes Material entsprechend der Hauptachse der besagten Zuleitung auf eine Weise mit Kanälen durchzogen ist, so dass der Gasstrom durch besagte Kanäle zirkuliert.

8. Vorrichtung nach Anspruch 7, wobei besagte Vorrichtung zur Präzipitation mehrere Materialien aus porösen Stoffen umfasst, welche in Serie und beabstandet entlang der besagten Zuleitung angeordnet sind.

9. Vorrichtung nach einem beliebigen der Ansprüche 4 bis 8, wobei besagte Vorrichtung (20) außerdem ein Mittel (18) zum Absaugen des Gasstromes umfasst.
